# EUROPEAN PATENT SPECIFICATION

(11) **EP 0 325 675 B1**
(45) Date of publication and mention of the grant of the patent: **12.07.1995**
(21) Application number: 88101308.0
(22) Date of filing: 29.01.1988
(51) Int. Cl.: F26B 9/00, F26B 21/00, A01F 25/08

(54) **Hay drying system**
Heutrocknungssystem
Système de séchage de foin

(43) Date of publication of application: 02.08.1989
(73) Proprietor: Mich, Vigilio, I-39100 Bolzano (IT)
(72) Inventor: Mich, Vigilio, I-39100 Bolzano (IT)
(74) Representative: Gustorf, Gerhard, Dipl.-Ing.

(56) References cited:
- CH-A- 334 191
- DE-A- 2 007 296
- DE-C- 319 604
- FR-A- 993 971
- GB-A- 832 277
- GB-A- 1 418 071
- US-A- 4 205 456
- US-A- 4 391 046

## Description

The present invention relates to a process for drying hay or the like as set forth in the preamble of claim 1.

The hay collection and treatment for feeding breeding cattle were, up to now, only partially faced and solved by mechanics applied to agriculture. The hay collection may be at present made by so-called "crop baling machines", which are able to collect hay and to compress it into usually cylindrical bales in short time and at low costs. With respect to a traditional method, which is adapted to collect loose hay and to transport it into rooms for the drying process, the collection of the hay and its pressure process into bales surely made easier and cheaper the hay collection and transport. At present, where the climate is particularly wet and rainy, the loose hay collection and transport are still observed, with subsequent complications and high costs. Wherever it is possible, the hay is mowed and let on the field for a pre-drying process directly in open-air; then it is collected and pressed into bales, which are usually cylindrical. The drying process is then finished in a particularly equipped rooms. If the hay is collected when it is green, it contains an high percentage of humidity. The pre-drying process reduces this humidity to a convenient rate of 30-35%, but, in emergency, it is possible to process the collected hay, also if it contains an humidity of 60%. In such a case, it is apparent that both time and costs of a complete drying process will increase. The necessity to complete in a short time the hay drying process is depending on the fact that, just in such a way the collected hay may represent a good food for cattle, otherwise the collected hay may degrade as far as organolectic and nourishing substances are concerned. Therefore, whereas the crop baling machines optimized the hay collection and transport, they made more complicated the hay drying process, especially because hay may reduce its humidity, especially the humidity in the interior of the bale, with more difficulty. If this humidity is not reduced in a short time, it causes hay to fermentate and to degrade its organolectic and nourishing characteristics.
Some process devices for drying hay pressed into bales are well known. They usually comprise a support plane for generally cylindrical bales which are involved by air processed by a heat-exchanger and blown by a fan. The pressed bale is wrapped in a appropriate shroud, made of heavy plastics, wherein air is blown or where air is extracted from. In such a way air could directly involve the bale and not be scattered all around. These devices are complicated and expensive, as far as investment, installation and running costs are concerned. Besides metallic handles are secured to the shroud and allow to control it, but they reduces its reliability; indeed a shroud should be frequently replaced by a new one. Each shroud is provided at the bottom with an opening, whereas the shroud is tightened around a hose, which blows air in or extracts it therefrom. In the latter case, the same ambient air passes through the bottom of the bale, flows through the bale and thereby reduces its humidity. In the first case, air can be heated and the hay humidity is removed together with the air which gets out from the top of the shroud. Actually the air which is exctracted or blown will flow through the shroud along the easiest way. This is not necessarly the whole bale, but frequently just that part of the bale where hay is less pressed or stands in the way of the air flow. For instance, in the case of blown-in air, the central part of the bale will be got more dry (especially for the soft-core bales), whereas the upper part of the bale far from the centre will be only marginally involved by the air flow. But the worst drawback is the handling of the shroud during wrapping, the high cost of the shroud itself, its quick deterioration and, last but not least, the time required to complete the wrapping operation and to remove the shroud from the bale.
A further recently introduced device is "packing" the bale by means of a sheet made of light plastics, which is winding all the bale around in order to hermetically seal it. In such a condition, the presence of a light quantity of air within said envelope causes hay fermentation process to be reduced. Therefore just a small part of hay nourishing substances is damaged. A drawback of such a device (which should overcome the way of hay collection transport and storage) is the cost of the machine which "packs" the bale and that it is necessary to integrate hay with the addition of further nourishing substances, so that it represents a good food for cattle. Indeed, the fermentation process destroys some nourishing substances in the hay.

In DE-A 20 07 296 a system for drying cultivation products is described in which a device is used having an air collecting room the upper surface of which is a plane. Accordingly, the whole base of each bale is resting on the same surface. This means that the drying air entering into the bale may immediately leave it laterally instead of penetrating the bale in an upward direction. This risk is very important in case of hard core bales, but also not negligible in case of soft core bales.

GB-A 1 418 071 relates to a system for drying or ventilating vegetable matter, for example corn, hay or potatoes which are not in the form of pressed bales but which are loosely spread on flooring slabs. Each flooring slab has a plurality of recesses the bottom of each of them forming a ledge. In each of the recesses there is arranged a foraminous cover which rests on the ledge such that the cover will not be contacted by a vehicle wheel rolled over the recesses or by the metal scoop of vehicle or machinery used for handling the vegetable matter.

It is an object of the invention to present a system in which all drying air is forced to involve the supporting base of the bales and can start the bale drying process such that the air penetrates the bale without the risk of leaving it just at the beginning of the drying process, i.e. in the lower part of the bale.

This problem is solved by the features of the characterising clause of claim 1 stating that the external dimension of each bale is greater than the dimension of the corresponding opening in the upper surface of the air collecting room such that the peripherical part of said base rests on the upper edge of said opening whereas the inner part of the base touches said protection means which lies below the level of the upper edge, thus forming a peripheral compressed shield zone in the lower part of the bale.

Due to the fact that the peripherical part of the base rests on the upper edge of the opening, said part becomes compressed thus forming a high packing zone which acts as a shield guiding the air upwardly.

These and further features will be apparent from the following description and in the enclosed drawings, where:
Fig. 1 represents a schematic block diagram of the system according to the invention;
Fig. 2 represents a perspective view of an element of the system according to the invention;
Fig. 3, Fig. 4, Fig. 5 and Fig. 6 represent a sectional view of hay-bales, in different operative conditions, which are supported by the element of Fig. 2;
Fig; 7 represents a schematic, sectional view of a particular solution of the element of Fig. 2.

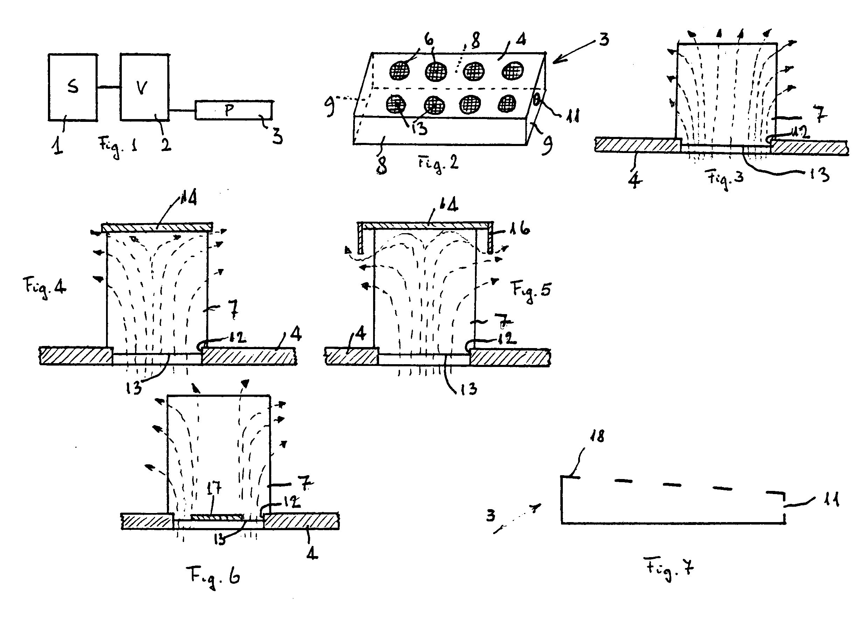

The system according to the invention comprises (Fig.1) a heat-exchanger 1, shown by S, a fan 2 shown by V, a frame 3 shown by P. Heat-exchanger 1 represents air treatment means and can be missing in the plant in presence of special conditions or it may be not utilized, whereas fan 2 is always present in the plant at a level of operating component. Frame 3 (Fig.2) is made of a floor 4, which represents the supporting means of the system, whereas frame 3 represents the collecting ambient. A plurality of openings 6, which are normally circular, are obtained on the floor 4; they have in any case the same profile as the bale 7, as far as its lower base is concerned (Fig. 3 to 6). Said openings 6 have a surface which is about equal to 80% of the lower base of the bale. For instance,if the bale has a lower base of 150 cm. diameter, opening 6 has a diameter of about 135 cm. Frame 3 comprises, beside floor 4, two vertical walls 8 lengthwise and two vertical walls 9 crosswise. On the front vertical wall 9 an entry 11 is obtained, which is adapted to cooperate with a pipe non represented in the drawings, which is connected with fan 2, in manner known per se. Each opening 6 (Fig.2) of the floor 4 is provided with a recess 12 (Fig. 3 to 6), the height of which is limited, with respect to the plane of the floor 4 by a grid 13 (Fig. 2), which represents protecting means, as it can allow a tractor to run on the floor 4 in order to arrange a bale on an opening 6. A further task of the grids 13 is (it is explained afterwards) to represent an actual standstill of the most lower base of the bales. Recess 12 cooperates with the grid 13 and with the lower base of the bale 7. Frame 7 can buried or can rest on the floor of the room, where bales are collected and dried. An important rule is the height of the floor 4 with respect of bottom of frame 3, which is situated between 0,4 and 1 m. In any case, frame 3 should be perfectly sealed, excepted the openings 6. Frame 3 may assume different shapes. For instance, it may be formed by just one row of openings 6, or by two rows. In both cases, the tractor transporting the bales is able to unload the frame 3 without mounting on it. Therefore the grid 13 should be designed just for enduring the weight of a bale. But the frame 7 may be made of a plurality of rows of openings 6 and may assume a square or rectangular shape. Grids 13 are at a level, with respect to the plane of the floor 4, which allows a recess 12 obtained between said plane of floor 4 and the grid 13. The height of recess 12 is about 8 cm. and allows the central part of the lower base of the bale 7 to touch the grid 13, whereas the peripherical part of said base is fixed on the external surface of the opening 6. In such a way, whenever frame 3 is supplied by the air pressed by the fan 2, all the drying air can involve all the supporting base of the bale and can start the bale drying process. The dimensions of the room in the frame 3 should be such as to allow an interior pressure equal to about 60 mm. W.C. That means a production of pressed air downstream the fan 2 having a value situated between 100-120 to 150 mm. W. C. This is the reason why the height of walls 8,9 should be comprised between 0,4 to 1 m. Actually, in such a condition, the bales 7 on the openings 6 should be involved by an air flow into any interior part of the bale 7. We stated that air could be heated or not. If heated, the air is processed by a heat-exchanger of traditional kind, or by solar panels, or by heat pumps. It is apparent that, using a warmer air, the drying process lasts less time, also if the air is just some degrees warmer. Whenever the humidity of the collected and pressed hay is quite high, this requirement could be necessary. For instance, if the hay humidity is about 60%, more time, a higher air pressure and a bigger air volume are necessary to satisfactorily complete the drying process, in order to avoid hay fermentation process and consequently its deterioration be started. Practically, in presence of a hay humidity of about 40%, ambient temperature air can be blown into the frame 3, provided that its R.H. (relative humidity) is lower that 50-55%. If drying process should not last so long, especially when many bales have to be processed, it is necessary to suitably adjust the air flow rate. At contrary, if the collected hay R.H. is higher than 40%, two factors should be involved: the air R.H. and the air volume. It could be necessary to flow into the frame 3 a pre-heated air and to suitably adjust the air volume, since a higher air heating process may correspond with a bigger air volume (if its R.H. is higher that 50-55%), under the same conditions of time required for completing hay drying process, that is as long as hay R.H. reaches a value of 17-18%. It is to be pointed out that, with hay bales having a 50% R.H., about 45 hours are required for completing drying process, whereas 24 hours are necessary just if the bales have a 30-35% R.N. Indeed each centigrade degree more with respect to the ambient temperature causes the air R.H. to decrease 5% and, consequently, to decrease the time for hay drying process completion.
The system according to the invention is adapted to dry not only the hay bales, but also of straw bales (from wheat, barleycorn and oats, as well as maize stacks). Furthermore crop baling machines may operate in order to obtain at least two kinds of bales: soft-core bales and hard-core bales. Drying process could be at a low costs and complete if air flow involves, in each opening 6, the entire bale, not only following the preferential ways, especially if along these ways is material less humid than in other areas of the bale. In the case of soft-core bales, for instance, the preferential flow way for the air could be the central one, where the material is less compressed and also less humid. Indeed the external part of the bale, more compressed, forms a kind of protective shield against the humidity from the rain, etc. Therefore, in the case of soft-core bales, a cover 14 is provided (Fig.4), having a substantially circular shape and having a dimensions lightly greater than the upper circular surface of the bale. This cover 14 is made of pressed material having a thickness not lower than 3 cm. Cover 14 represents cover means which are adapted to accelerate and complete the drying process especially for soft-core bales. Actually, should said cover 14 not be provided, the air which flows from opening 6, would follow a substantially central and vertical way inside the bale and would not involve the peripherical parts of the bale, which would remain humid. Thanks to the cover 14, the air is obliged to follow the paths shown in the figure and to involve also the peripherical parts of the bale, removing the humidity included therein.

Cover 14 is made of pressed material having a thickness not lower than 3 cm. and it is sufficiently heavy so that it can adhere to all the upper surface of the bale. In some cases cover 14 can be provided of an edge 16 (Fig.5) having a height situated between 15 and 20 cm. and made of light plastic which is fixed all around to the cover 14. Edge 14 is particularly right for very humid hay bales and it is adapted to accelerate the drying process in any critical conditions of the hay bale. Edge 16 has the effect to produce in the upper part of the bale an area of air having a pressure lightly higher than the pressure of the air circulating into the bale. The air which involves the central part of the bale goes up, meets said upper part, just partially gets in and gets out from the low part of the edge, whereas the other air is obliged to get out from the exterior lower part of the bale. The drying process is consequently highly accelerated and completed in a regular way in all the interior parts of the bale. It is convenient to put the cover 14 on the bale just as soon as the drying process is starting and not after said process is started. Indeed, in such a case, the hay contained in the external part of the bale increases its temperature and partially loses its nourishing substances, due to the air lacking as the preferential ways involve the central part of the bale. In the case of hard-core bales, other problems arise. Drying air follows, through the grid 13, the preferential ways of the external cylindrical part of the bale, but may partially involve also its central part which is less humid, as it is more compressed. This is the reason why a disk 17 is put on the grid 13 (Fig.6) which represents air flow interdiction means and may be provided with a plurality of small holes, non represented in the drawings, whenever the central axial part of the bale contains just some humidity to be eliminated. In such a way the drying process of a soft-core bale can be more complete and quicker. A particular shape of the frame 3 (Fig. 7) represents a further expedient which accelerates the drying process and makes said process to be uniform for all the bales put on said frame 3. Especially in the case of frames 3 having a dimension lenghtwise prevailing on the dimension crosswise, the air flowing through the entry 11 (Fig.2) causes the interior pressure to be higher in correspondance of the opposite of entry 11 and the same pressure to be lower in correspondance of the openings 6 which are close to the entry 11. The consequence is the bales which get dried the first are the bales at the end of the frame, whereas the bales which get dried the last are the bales which are close to the entry 11. In order to avoid this drawback, a lightly inclined floor 18 is provided with respect to the supporting plane of the frame 3, in such a way that the cross section of the room internal to the frame 3 offers and useful height of about 40 cm., said height being adapted to increase up to about 50 cm. in correspondance of the end of the frame. The expedient of the inclined floor 18 representns initial air-pressure levelling means in the interior of the frame 3.
Finally the system according to the invention is particularly cheap due to the fact that this system may be also in open air, with a simple protection of a roof, supported by four or more poles, but with no vertical walls for the protection of the ambient. The so described cover may be also reduced to a simple sheet or cloth of plastic material, which can be removed when it is necessary for loading the bales on the frame. Then, it is arranged on the bales directly touching the upper part of the bales. The various so described solutions allow the system according to the invention to build up a cheap, quick and complete drying process, with the result of hay bales which are containing complete nourishing characteristics per cattle.

## Claims

1. Process for drying hay or the like as straw, corn-stalk and other residual cultivation products, appearing in the shape of pressed bales with a substantially circular base, the pressure inside said bales being substantially regular, or decreasing or increasing from the inside to the periphery, obtaining in such a way so called uniform-pressure bales or hard-core bales or soft-core bales, respectively, said process using an air flow directed through an air collecting room (3) to openings (6) provided in the upper surface of said room (3) and covered by protection means (13) supporting the base of each bale (7), characterised in that the external dimension of each bale (7) is greater than the dimension of the corresponding opening (6) in the upper surface (4) of the air collecting room (3) such that the peripherical part of said base rests on the upper edge of said opening (6) whereas the inner part of the base touches said protection means (13) which lies below the level of the upper edge, thus forming a peripheral compressed shield zone in the lower part of the bale (7).

2. Process according to claim 1, characterised by the use of further shield means (14) adapted to cover the upper surface of each bale (7), the diameter of each shield (14) being greater than the diameter of the upper bale surface.

3. Process according to claim 1 or 2, suited for drying soft-core bales, characterised by the fact that an air flow interdiction means (17) is positioned on said protection means (13) such that drying air flows predominantly through the peripheral part of the bale (7) in order to accelerate the drying process.

4. Process according to anyone of the preceding claims, characterised by the use of initial air-pressure levelling means (18) inside of the air collecting room (3), said means (18) consisting in the inclined position of the upper surface (4) of said room (3) with respect to the bottom of said room (3) such that the air pressure is substantially regular inside of said room (3) according to a lengthwise direction and that the time required for completion of said drying process is substantially the same for all bales (7) resting on said openings (6).

5. Process according to claim 4, characterised by the fact that the room (3) at its front wall (8) comprising the air inlet (11) is about 0,4 m high and has an increasing height up to about 1 m at the opposite rear wall (9), such that the interior pressure in said room (3) is regular and substantially equal to 60 mm W.C.

## Patentansprüche

1. Verfahren zum Trocknen von Heu oder dergleichen wie Stroh, Getreidestengel und andere Anbaurestprodukte, die in Form gepreßter Ballen mit im wesentlichen kreisförmiger Grundfläche vorliegen, wobei der Druck innerhalb der Ballen im wesentlichen gleichmäßig oder von innen nach außen abnehmend oder zunehmend verteilt ist, so daß die Ballen eine gleichmäßige Packungsdichte bzw. einen harten Kern bzw. einen weichen Kern haben, wobei in dem Verfahren ein Luftstrom durch einen Luftsammelraum (3) zu in der Oberseite des Luftsammelraums (3) angebrachten Öffnungen (6) geleitet wird, die durch Schutzeinrichtungen (13) abgedeckt sind, auf denen sich die Grundfläche jedes Ballens (7) abstützt, **dadurch gekennzeichnet**, daß die äußere Abmessung jedes Ballens (7) größer ist als die Abmessung der entsprechenden Öffnung (6) in der Oberseite (4) des Luftsammelraums (3), so daß sich der Außenumfangsbereich der Grundfläche auf der Oberkante der Öffnung (6) abstützt, während der Innenbereich der Grundfläche die Schutzeinrichtung (13) berührt, die unterhalb der Ebene der Oberkante liegt, wodurch sich im unteren Teil des Ballens (7) ein ringsum verlaufender, komprimierter Abschirmbereich ausbildet.

2. Verfahren nach Anspruch 1, **dadurch gekennzeichnet**, daß weitere Abschirmmittel (14) eingesetzt werden, die die Oberseite jedes Ballens (7) abdecken können und deren Durchmesser größer als der Durchmesser der Oberseite des Ballens (7) ist.

3. Verfahren nach Anspruch 1 oder 2 für die Trocknung von Ballen mit weichem Kern, **dadurch gekennzeichnet**, daß auf die Schutzeinrichtung (13) ein den Luftstrom unterbrechendes Sperrelement (17) gelegt wird, so daß die Trocknungsluft überwiegend durch den äußeren Umfangsbereich des Ballens (7) strömt und dadurch den Trocknungsprozeß beschleunigt.

4. Verfahren nach einem der vorhergehenden Ansprüche, **dadurch gekennzeichnet**, daß Mittel (18) zur Nivellierung des Luftdrucks innerhalb des Luftsammelraums (3) vorgesehen sind, die darin bestehen, daß die Oberseite (4) des Luftsammelraums (3) zu dessen Boden in einer solchen Weise geneigt verläuft, daß der Luftdruck in dem Luftsammelraum (3) in dessen Längsrichtung im wesentlichen gleichmäßig ist, so daß der Zeitbedarf zum vollständigen Trocknen für alle sich auf den Öffnungen (6) abstützende Ballen (7) im wesentlichen gleich ist.

5. Verfahren nach Anspruch 4, **dadurch gekennzeichnet**, daß der Luftsammelraum (3) an seiner den Lufteinlaß (11) aufweisenden Vorderwand (8) eine Höhe von etwa 0,4 m hat, die bis zur gegenüberliegenden Rückwand (9) auf etwa 1m ansteigt, so daß der Innendruck in dem Luftsammelraum (3) gleichmäßig etwa 60 mm WS beträgt.

## Revendications

1. Procédé de séchage du foin et matériaux similaires, comme la paille de blé, de céréales, ou autres produits résiduels de culture, présentés sous la forme de bottes comprimées à base sensiblement circulaire, la pression à l'intérieur des bottes étant à peu près uniformément répartie ou décroissant de l'intérieur vers l'extérieur ou inversement, de telle sorte que les bottes sont, selon le cas, à densité de tassement homogène, à coeur dur ou à coeur tendre, procédé dans lequel un courant d'air est conduit par l'intermédiaire d'un collecteur d'air (3) vers des ouvertures (6) pratiquées dans la paroi supérieure de ce collecteur (3), celles-ci étant recouvertes par un dispositif de protection (13) sur lequel s'appuie la base de chaque botte (7), caractérisé par le fait que la zone périphérique de la base s'appuie sur le bord supérieur de l'ouverture (6), tandis que la zone interne de la base est en contact avec le dispositif de protection (13) dont le plan est situé en dessous de celui du bord supérieur de l'ouverture, de sorte que se forme dans la partie inférieure de la botte (7) une zone comprimée annulaire formant écran.

2. Procédé selon la revendication 1, caractérisé par le fait que sont utilisés d'autres systèmes formant écran (14) qui recouvrent la partie supérieure de chaque botte (7) et dont le diamètre est supérieur au diamètre de la partie supérieure de la botte (7).

3. Procédé selon la revendication 1 ou 2 pour le séchage de bottes à coeur tendre, caractérisé par le fait qu'un élément de blocage (17) pour l'interruption du courant d'air est posé sur le dispositif de protection (13) de sorte que l'air de séchage s'écoule en grande partie à travers la paroi latérale de la botte (7) et accélère ainsi le processus de séchage.

4. Procédé selon une des revendications précédentes, caractérisé par le fait que sont prévus des moyens (8) d'égalisation de la pression d'air à l'intérieur du collecteur (3) qui consistent en ce que la paroi supérieure (4) du collecteur (3) est inclinée par rapport au fond de celui-ci, de telle façon que la pression d'air dans le collecteur (3) est sensiblement uniforme sur toute la longueur de celui-ci, de sorte que le temps nécessaire pour le séchage complet est sensiblement le même pour toutes les bottes (7) placées sur les ouvertures (6).

5. Procédé selon la revendication 4, caractérisé par le fait que le collecteur (3) présente sur sa paroi antérieure, où se situe l'entrée d'air (11), une hauteur d'environ 0,4 m qui augmente jusqu'à la paroi postérieure (9) pour atteindre une valeur d'environ 1 m, de telle sorte que la pression interne dans le collecteur (3) est uniforme et correspond à une hauteur de colonne d'eau d'environ 60 mm.
